# EUROPEAN PATENT SPECIFICATION

(11) **EP 1 071 278 B1**
(45) Date of publication and mention of the grant of the patent: **17.05.2006**
(21) Application number: 00402032.7
(22) Date of filing: 17.07.2000
(51) Int. Cl.: H04N 5/272, H04N 5/262

(54) **Multi-camera, multi-feed and interactive virtual insertion systems and methods**
Mehrfachkamera, Mehrfachspeisung und interaktive virtuelle Einblendungssysteme und Verfahren
Caméra multiples, systèmes et méthodes d'insertion virtuelle et interactive et alimentation multiple

(30) Priority: 19.07.1999 US 356382
(43) Date of publication of application: 24.01.2001
(73) Proprietor: Leo Vision, 92170 Vanves (FR)
(72) Inventor: Bruno, Pierre, 75011 Paris (FR); Grimaud, Jean-Jacques, Portola Valley, CA 94028 (US)
(74) Representative: Loisel, Bertrand

(56) References cited:
- WO-A-95/10919
- FR-A- 2 730 837
- US-A- 5 870 139

## Description

The present invention relates to virtual insertion systems for video transmission and, more particularly, to systems and methods for providing virtual insertion into a video transmission systems that uses multiple cameras and provides multiple output feeds and/or for providing virtual insertion in response to interaction from a viewer.

Virtual insertion systems are systems that replace or overlay a target region in a video sequence with a substitute image graphic or video. A typical virtual insertion system takes as its input a video feed (generally a "dirty" feed what includes graphic layers and/or special effects) showing, e.g., a sporting event and replaces a commercial billboard shown in the video feed advertising one product or company with a virtual graphic advertising another product or company. This modified feed is then broadcast or otherwise delivered to the viewers.

In general, virtual insertion systems identify the target region to be replaced in the video feed either by image recognition techniques or by analyzing data from an instrumented camera providing the feed. Virtual insertion systems also differ in their flow or sequencing, in particular, the location in time and place of the image processing systems and virtual insertion device. A multi-camera "midlink" virtual insertion system is disclosed and claimed in application PCT/FR99/03183, hereinafter "the PCT Application".

A more complete description to the basic components and processes of virtual insertion systems is provided in the PCT application, U.S. Patent Nos. 5,264,933, 5,363,392, 5,436,672 and 5,543,856 and French Patent No. 94-05895, to which reference may be made. A tracking module associated with each camera output provides information regarding the target region.

A tracking module is associated with the camera for providing information on the target region. If there is a requirement for N different output feeds with different substitutions for different audiences, then N different substitution modules need be provided. If there are M cameras among which a selection may be made in a control room for delivery of N output feeds, then M.N insertion modules are necessary and the system is quite complex.

The present invention is for a network-based system which begins with a multi-camera virtual insertion system similar to that disclosed in the PCT application and includes additional modules for performing certain functions which result in a multi-camera, multi-feed virtual insertion system having predefined "script" for controlling the order, content and timing of insertions during and event. Advantageously, these predefined scripts may be updated or changed during the event, either based on interactivity with the viewer or on other factors, such as input from the broadcaster.

FR-2 730 837 discloses a virtual insertion system and method as recited in the respective preambles of claims 1 and 7. The invention is defined in the respective characterizing parts of claims 1 and 7.

Other features are defined in the other claims. In a particular embodiment, each camera has its field of view of a live event.

The system is based on a concurrent processing architecture and an important element of the systems is a scenario server. Such a server can define scripts and transfer respective scripts to a graphic feed module which is associated with each of the multiple output video feeds. The scenario server also controls the flow of data between the graphic feed modules and the various other modules that form part of the system.

Each tracking module tracks the targets by either processing the image received from the cameras (typically a "dirty" feed which already includes graphics, etc.) or analyzing data provided by instrumentation on the camera (i.e., pan, tilt, zoom, focus), or by a combination of the two. This tracking is automatic and algorithmic because it must be accomplished in real- time or near real time. The tracking information is provided to the graphic feed modules as well as to the scenario server. It may be much simplified when using the fixed wide field camera approach described in EP application no.99/400 986.8.

The transition analysis module provides information regarding the identification of the camera or cameras providing the current video feed, i.e., the "on-air" camera(s); the transition analysis system bases its output on various data, including the tally signals provided by the switcher (multiplexer) in a typical outside broadcaster (OB) van, and verbal orders regarding camera transitions given by the director in the OB van. Advantageously, these verbal orders are interpreted using voice recognition technology.

The scenario server is connected in client/server fashion to the graphic feed modules, the tracking modules, and the transition analysis module for controlling these modules and for providing the data connections between these modules. Advantageously, the scenario server is connected to the various modules via a network, such as an Ethernet, which provides for de-centralization of the various functions while retaining centralized control to allow for fast and efficient updating of the various scripts or scenarios for a broadcast event.

The graphic feed modules use the target identification and location information provided by the tracking modules, the identification of the "on-air" camera(s) provided by the transition analysis module, and the scripting information (including the content of the replacement images or animations), to manipulate the specified replacement images or animations and to replace the specified targets at the scripted times. Animations typically comprise a series of images which are sequentially displayed.

The architecture and functionality of the present invention provides a large amount of flexibility, allowing its use on a diverse variety of delivery systems such as TV, DTV, HDTV, Cable, Satellite, Interactive Television, Internet, etc; the present invention's flexibility is realized when it is used with the developing distribution systems which allow for distributed broadcasting, that is, broadcasting to an identifiable segment of viewers, such as through cable. The multiple feed capability of the present invention allows the various output feeds to be tailored to a particular subset of viewers, such as by location or by language, and with a high degree of granularity. For example, a cable feed may be differentiated at the area, county, zip code, headend, or pedestal level. Thus, the advertisements, etc. which are inserted into a particular broadcast can be market tailored simply by changing the script for the appropriate feed.

Moreover, the system of the present invention is ideally suited for use with delivery systems allowing interactivity with the viewer. Such delivery systems include digital broadcast over private networks or the internet. Specifically, the bandwidth provided by cable internet access even currently allows for fairly good quality digital video transmission and the available quality is improving constantly. With cable internet access, interactivity is made possible by two-way cable modems or telephone-return cable modems. Interactivity is also possible with other delivery systems, such as wireless.

As noted above, the multiple feed capability of the present invention allows the scripts to be changed to fit particular delivery characteristics, such as regions or languages. Additionally, the scripts may be changed or modified in response to interactivity from a viewer or a cluster of viewers, thus enabling targeted and interactive marketing (e.g., one-on-one marketing, permission marketing, relationship marketing).

For that purpose, the tracking module may be arranged for generating "handles" indicative of the location of the target region and of the fact it constitutes an "active area", which are displayed on the interactive receiver of a viewer. Then interactivity may be achieved by providing a computer detected selection of an active area, responsive to a mouse click in the area for instance, and causing a change in the substitution.

Other features and advantages of the present invention will become apparent from the detailed description of embodiments of the invention which follows and refers to the drawings wherein :
Figure 1 is a schematic block diagram of an insertion system in accordance with an embodiment of the invention.
Figure 2 is a schematic block diagram of the insertion system of Figure 1 in conjunction with a cable broadcast system.
Figure 3 is a front view of a screen display showing the use of "active areas" in accordance with another embodiment of the invention.
Figure 4 is a front view of a screen display showing the use of "active areas" in accordance with an alternate embodiment of the invention.
Figure 5 is another schematized representation of an insertion system.

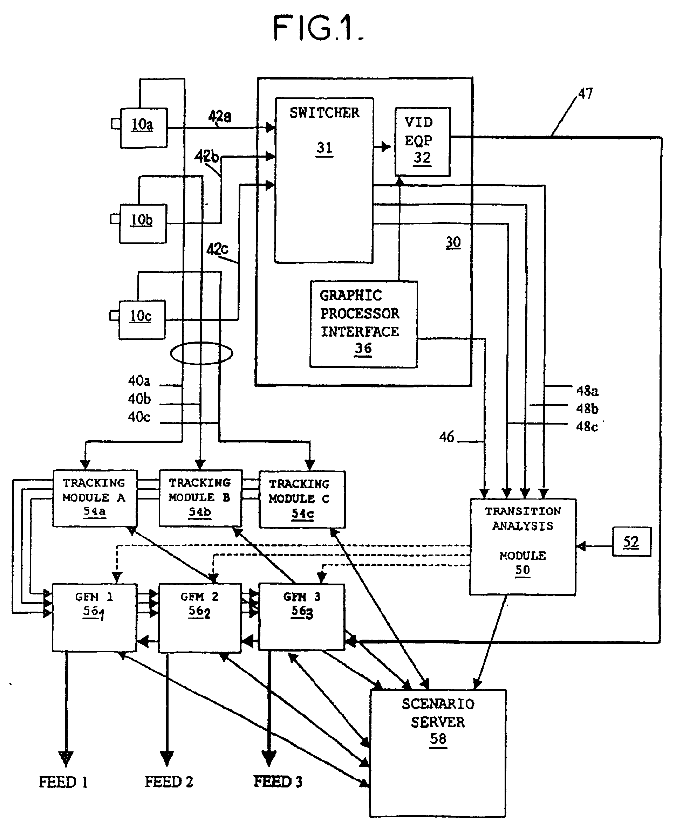

A system in accordance with an embodiment of the invention is shown in Figure 1. Portions of figure 1 are similar to the "midlink" virtual insertion system disclosed in Figure 6 of the PCT application, which includes a multi-camera insertion system.

In Figure 1, the cameras 10a, 10b and 10c are instrumented cameras and have corresponding data lines 40a, 40b and 40c. While three cameras are shown, the system can be configured to utilize input from any number of cameras. Triaxial cables 42a, 42b and 42c, which carry camera power and image signals, are connected from the respective cameras to the mobile control room or van 30. A conventional switcher 31 (typically a digital switcher) is connected to conventional video equipment 32 which, as discussed in the PCT application, adds whatever graphics and special effects that are to be added. The control room 30 also includes a graphic processor interface of GPI 36 which is connected to the video equipment 32 and which produces output signals based on the layers of graphics as well as special effects (e.g., slow motion) which have been added to the video image signal. These GPI signals are sent over a GPI line 46 to be input to a transition analysis module (TAM) 50. In addition, tally signals for cameras 10a, 10b and 10c are sent to TAM 50 from switcher 31 over respective output lines 48a, 48b and 48c.

Video Equipment 32, in cooperation with switcher 31, produces, on output line 47, a broadcast '("dirty feed") signal or feed, i.e., and edited signal which contains whatever layers of graphics and special effects that have been added to the video image signal. This dirty feed is transmitted in digital form to the Graphic Feed Modules (GFMs). In this embodiment, there are three Graphic Feed Modules (GFM 1-GFM 3), labeled 56 1, 56 2 and 56 3, respectively, each producing its own output feed. However, any number of Graphic Feed Modules can be used, each one producing an output feed. If the control room or van 30 is adapted to produce an analog signal, conversion of the signal from analog to digital is performed.

The function of the transition analysis module (TAM) 50 is to provide information regarding the identification of the current "on-air" camera or cameras to the GMFs and the Scenario Server 58. The information is either provided directly to the GFMs or through the Scenario Server, as shown in Figure 1 this information, in conjunction with the tracking data for each camera provided by the Tracking modules 54a-54c is utilized by the GFMs 56a-56c in order to determine exactly how to manipulate and insert/animation insertions into the feed. For example, if the feed contains a video sequence wherein camera 10a transitions to camera 10b by a wipe from left to right and if a first target is in the field of view of camera 10a, the insertion that will replace that target must be manipulated by the associated Graphic Feed Module so as to match the wipe as the first target is wiped from the screen.

The function to the transition analysis module is somewhat similar to the Logic control unit in figure 7 of the PCT application. TAM 50 bases its output on various ate, including the tally signals 48a - 48c provided by the switcher 31, the Graphics Processor Interface signals 46 and, in a preferred embodiment, the orders regarding camera transitions given by the director in the outside broadcaster (OB) van. Advantageously, these are verbal orders and are interpreted using voice recognition technology through microphone 52.

Preferably, the transition analysis module provides more than just an indication of when there is a cut from camera to another, because, as discussed in the example above, transitions between cameras are often made gradually over a certain number of frames and with particular transition types such as wipe, dissolve, etc. How to anticipate and detect these transitions so that the inserted images and graphics can be properly manipulated or modified to fit the transition by a Graphic Feed Module will now be explained.

In an embodiment, a transition table is developed which provides a set of camera states (e.g., camera 1 on-air, camera 2 on-air) and a default transition between these states (e.g., wipe from camera 1 to camera 2, dissolve from camera 2 to camera 3). The data in the transition table is characteristic of the way a particular broadcaster broadcasts a particular type of event. For example, a broadcaster will likely use the same or very similar transitions between cameras 1 and 2 for all of the home baseball games it broadcasts for a particular team. These consistent transitions help to provide the same "look and feel" to each of the games. In the present invention, this consistency allows prediction of the likely transitions between specific cameras for a particulars event and, hence, a transition table may be developed for use during the broadcast. Advantageously, fuzzy logic or a neural network is used to develop the transition table over time based on the broadcast of similar events as a great deal of transition information is provided in the presently used 25 pin tally cable. A typical transition table for a three camera system is disclosed in Table 1.

**TABLE 1**

| **CAMERA TRANSITION** | **TRANSITION TYPE** | **LENGTH OF TRANSITION** |
|---|---|---|
| Camera 1 → Camera 2 | Wipe left to right | 60 Frames |
| Camera 1 → Camera 3 | Dissolve | 30 Frames |
| Camera 2 → Camera 1 | Wipe Top to Bottom | 30 Frames |
| Camera 2 → Camera 3 | Mix | 20 Frames |
| Camera 3 → Camera 1 | Dissolve | 30 Frames |
| Camera 3 → Camera 2 | Wipe Bottom to Top | 30 Frames |

As an alternative to or in addition to the transition table, voice recognition technology is used to "interpret" the commands from the director in the OB van, through microphone 52. For example, commands of "dissolve 2", "wipe 3", "ready graphics", or "graphics", are each used to define the transition between cameras in the feed and this information helps provide the information necessary for manipulating the image of graphic to be inserted to fit the transition. This voice recognized information can be used in real-time or it can simply be used to help develop the transition table over time.

In addition to providing the transition information to the Graphic Feed Modules, the transition analysis module also provides the transition information to the Scenario Server 58. The Scenario Server uses the transition information in building the scripts.

Scenario Server 58 is connected in client/server fashion to Graphic Feed Modules 56 1 - 56 2, Tracking Modules 54a-54c, and transition analysis module 50 for controlling these modules and for providing certain date connections between these modules. Advantageously, Scenario Server 58 is connected to the various modules via a network, such as an Ethernet, which provides for de-centralization of the various functions while retaining centralized control, thus allowing for fast and efficient updating of the various scripts or scenarios for a broadcast event.
A "configuration" represents the status of all the targets for a given period of time for a particular feed. A script comprises a group of configurations for which it defines the order and timing. Thus, a script is the set of instructions regarding the order, content and timing for replacement of targets in a particular video sequence. A script is associated with a particular feed (and thus a particular Graphic Feed Module) and is based on information regarding the targets to be replace, the images and/or animations designated to replace targets, and the duration of the replacement for each graphic and/or animation. For example, a script may specify that a particular billboard (target) shown in the feed of an soccer game is to be replaced with and advertisement for company A for the first half of the game and an advertisement for company B for the second half of the game. A simplified script for a video sequence is such an event is shown in Table 2.

**TABLE 2**

| TARGET | 1^{ST} HALF | 2^{ND} HALF |
|---|---|---|
| Target A | Image 1 | Image 2 |
| Target B | Image 2 | Animation 1 |
| Target C | Animation 2 | Animation 2 |
| Target D | Image 3 | Image 1 |

Other information contained in the configuration and thus the script is the size of each image or animation (in Mb) and the colorimetric parameters of each image/animation. Images typically comprise a single frame or image and animations typically comprise a series of images which are displayed sequentially.

While the data connection between the modules is controlled via Scenario Server 58, in a preferred embodiment, the real-time video it self is transferred from the video equipment 32 to the Graphic Modules 56 1-56 3 through traditional means (cable, satellite, etc.) as shown as signal 47. Preferably the images and graphics to be inserted are transmitted from Scenario Server 58 to the Graphic Feed Modules 56a-56c shortly (seconds) before they are needed by the Graphic Feed Modules. This timing allows modification or manipulation of the replacement images or graphics in almost real-time, in response to interactivity with the viewer or other information, such as a happening at the event which is being broadcast (e.g., placement of a particular ad if the local team wins).

Graphic Feed Modules 56 utilize the target identification and location information provided by at least one of Tracking Modules 54a-54c, the identification of the "on-air" camera(s) provided by transition analysis module 50, and the scripting information (including the content of the replacement images or animations) provided by Scenario Server 58 to manipulate the specified replacement images or animations and to replace the specified replacement images or animations and to replace the specified targets at the scripted times. Advantageously, each GFM also uses the zoom and focus information from the current "on-air" camera (provided by the tracking modules) to associate a particular level of fuzziness with the replacement image or animation to more closely fit it to the video feed. A GFM may be associated with a number of Tracking Modules so that the GFM will attend to (e.g., replace) targets identified by each of the associated tracking modules. As shown in figure 1, tracking modules 54a-54c provide the target tracking information to GFMs 561-56 3 and each GFM may receive information from any number of tracking modules. As noted above, tacking modules 54a-54c must provide the tracking information regarding the targets automatically and algorithmically so that such can be accomplished in real time or near real time.

In summary, Scenario Server 58 runs scripts which control the replacement of targets by Graphic Feed Modules 56 1-56 3. The scripts contain the content of the replacement images/animations themselves and the order and timing of the replacements. Advantageously, the scripts are transferred to GFMs 56 over the network connection.

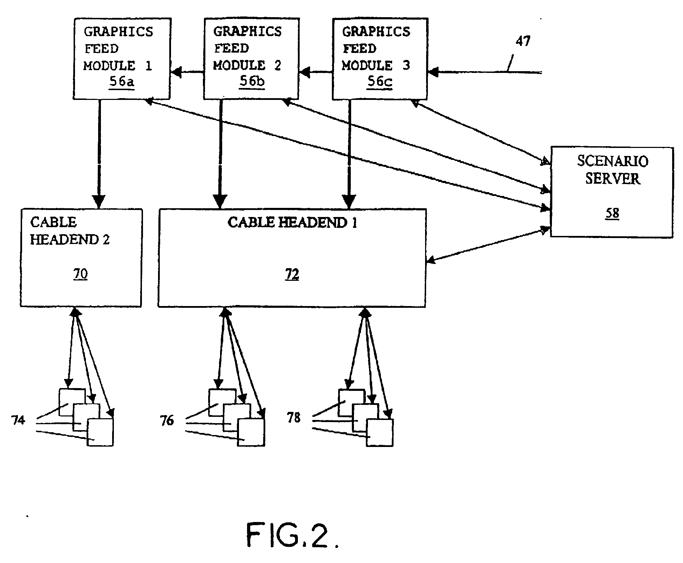

One embodiment of the invention which takes advantage of the multiple feeds is shown in Figure 2 which is a schematic block diagram of the GFMs from the insertion system of figure 1 in conjunction with a cable broadcast system. In the embodiment shown in figure 2, the feed from GFM 1 is provided to cable head end 72. Preferably, the GFMs are co-located with the cable head ends or communicate therewith over high speed transmission lines.

Cable head end 70 receives its feed from GFM 1 and distributes it over its cable network to receivers 74; Similar, cable head end 72 receives the feeds from GFM 2 an GFM 3 and distributes these feeds to receivers 76 and 78, respectively. Thus, two different feeds are received into cable head end 72 and these feeds are then sent to the appropriate subscribers. As noted above, the subscribers receiving the different feeds may be differentiated based on language, geography, or other demographic information. In an alternate embodiment, information regarding the feeds is sent to cable head end 72 by Scenario Server 58.

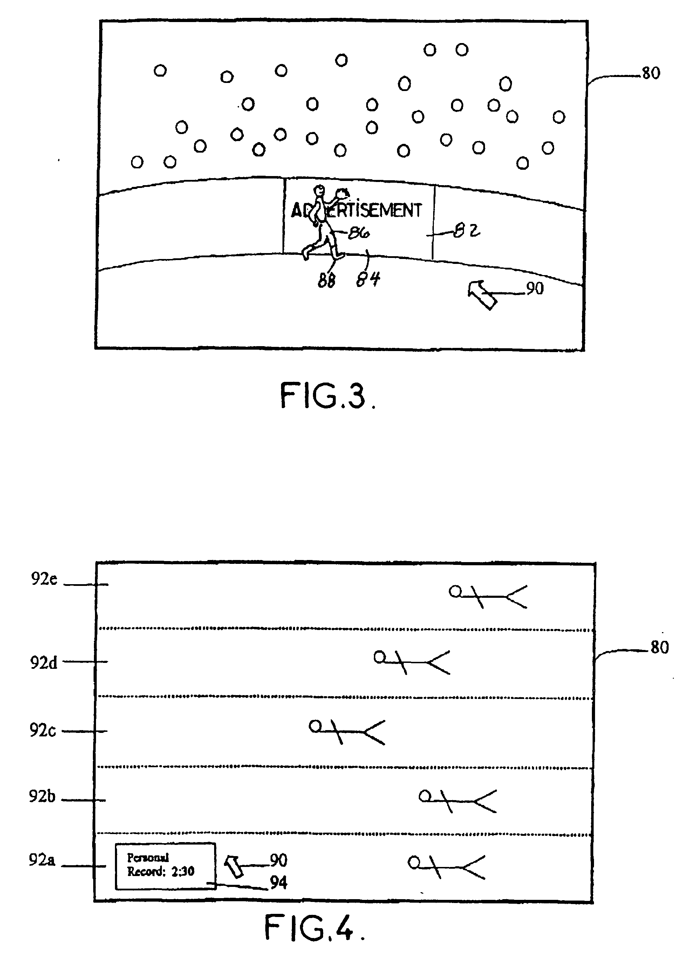

Turning now to figures 3 and 4, in an embodiment of the invention, a script also defines certain areas of the feed as areas for enabling interactivity with the viewer. These "active areas" are predetermined locations in the images of a broadcast on which a viewer may click a mouse, pointer, etc. to indicate a selection. Active areas are generally defined by a geometric area (e.g., represented by Cartesian or polar coordinates) of the field, frame or image being displayed and move with the image by use of the same technology which positions the targets, as disclosed above. Thus, the active areas are not simply areas in a fixed position on the screen, like banners or buttons in World Wide Web pages transferred over the Internet, but the information regarding a selection can be received and transferred back up the network (e.g., to the cable head end) in the same way as such is accomplished over the World Wide Web.

While the multi-camera, multi-feed system provides a broad range of functionality which is described below, in its most simple form, the interactive virtual insertion system of the present invention comprises a camera for providing a camera output, a tracking module for receiving said camera output and tracking a predefined active area in said camera output, a server for providing said camera output to an interactive receiver, and a computer for detecting a selection of said active area from said interactive receiver and for providing a response to said selection.

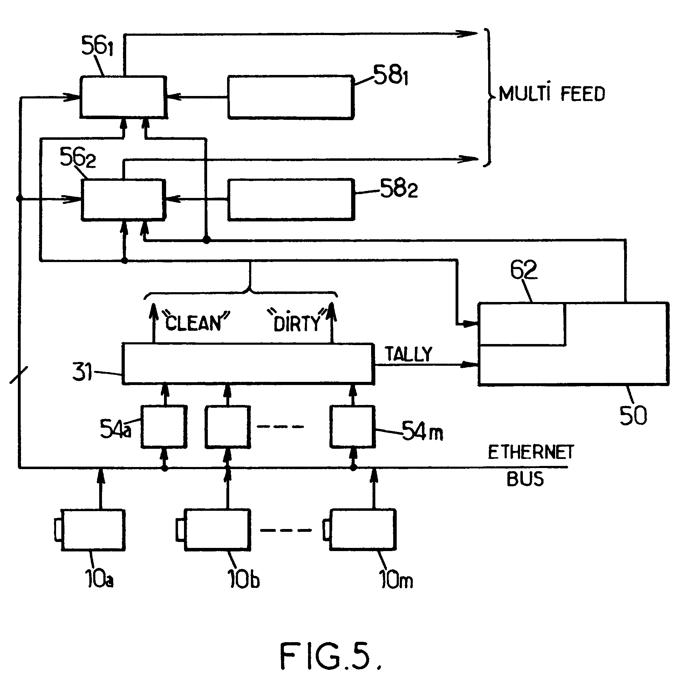

A simplified representation of a system according to another aspect for the invention is given in Figure 5, where the elements corresponding to those of Figure 1 are designated by the same reference numbers. The link between the components, including the digital cameras 10a,...., 10m, the tracking modules 54a,... 54m, the GFMs 561-56 3 is an Ethernet bus. Switcher 31 operates as a mixer and selector. Abrupt transitions or "cuts" are detected at 62. The transition analysis module 50 controls the GFM1 56 based on tally signals and data received from 62.

A system of the invention has the capability of providing certain choices to the implementer (one who is using the system to deliver a broadcast to the ultimate users) regarding the definition of the active area. For example, as shown in Figure 3, if the feed being displayed on display 80 includes a background comprising billboard 82 on the outfield wall in a baseball game being broadcast and a foreground comprising a player 90 running is front of billboard 80, the active area may be 1) the entire area of billboard 82, whether or not is being occluded by player 88 (i.e., the background only); 2) the area of billboard 82 not being occluded by player 88 (area 84) (i.e., the background minus the foreground) ; or 3) the area of billboard 82 being occluded by player 88 (area 86) (i.e., only the background plus the foreground). Thus, one of the options can be defined as the active area or each option can define a different active area. These three areas are particularly distinguishable when utilizing the system embodiment wherein the targets and active areas are tracked using instrumented cameras.

These active areas create an enormous potential for interactivity with the video feed. For example, as shown in Figure 4, if the feed being displayed on display 80 is of a swim meeting, the swim lanes 92a-92e may be designated as hot spots and, when the user clicks a pointer or mouse on a particular lane, the swimmer's statistics may be displayed, as shown at box 92. While in the preferred embodiment the swimmer's statistics (i.e., the requested date) are inserted by a GFM at some point upstream, in an alternate embodiment, the statistics for each swimmer (i.e. data associated with all possible choices) are included with the feed and the requested statistics are extracted from the feed by the user's receiver and displayed.

As an alternate example of the use of active areas, the cars in an auto race may be designated as active areas and, when the user clicks on a particular car, the car's gauges may be displayed. The invention also provides for displaying predetermined information when a user clicks on an advertisement that has been designated as an active area in the feed, whether that advertisement is part of the clean feed or has been inserted by a graphic feed modules, as disclosed above.

Advantageously, an implementer may choose to associate an active area with a remote or delayed action rather than an immediate response such as those disclosed above. An example of such use includes tallying an all-star vote for a baseball player when a viewer clicks on the player (88, in Figure 3) during a game broadcast (or a selected portion of a game broadcast). The results of such voting can then be posted at the end of the game. Similarly, selection of a particular active area may store the previous play in memory for replay at a later time.

Advantageously, selection of an active area is signaled by a change of color in the active area image or by an audio signal or message. Similarly, if an active area is unable to be re-selected, attempted re-selection is signaled by an appropriate text or audio message (e.g., when the active area is used for voting).

A key to this portion of the invention is that, as with replacement of the targets, the active areas may be associated with their functions by the implementer (e.g., at the cable head end) and thus can be tailored. The system of the invention provides "handles" to the implementer in the form of the coordinates of the active areas. The handle information may be inserted in the blanking interval of the video or, in digital broadcast, at any appropriate time such that it may be utilized during display of its associated image of frame. The handles which define the geometric locations to the active areas (and targets if the implementer has control of those as well) must be updated to the implementer frequently (e.g., once each image or frame) because they are constantly changing as the active areas (and targets) move in the display.

Thus, the system is flexible so that, if desired, the implementer may choose whether and how to use each of the active areas. The functions associated with each active area can be determined by a broadcaster upstream (e.g., the initial broadcaster of the event) or by the implementer. In an embodiment, if an upstream broadcaster is determining the functionality of the active areas, this functionality is defined by Scenario Server 58 and this functionality is part of the script for each video segment. Alternatively, if the implementer is determining the functionality of the active areas, such is accomplished with a computer controlled by the implementer. Such computer is advantageously linked to Scenario Server 58 to provide data regarding the active areas back upstream in the system.

The provision of the coordinate data for the targets and the handles for the active areas as part of, or in conjunction with, the video feed makes the system of the present invention particularly well suited to delayed broadcast as well. In such a case, the script defining the target replacement and the active area usage and functionality may be tailored for the particular time of the broadcast, in addition to the tailoring based on location, language, and interactivity disclosed above. Thus, the advertisements provided during an initial broadcast of a sporting event may be different (and likely more expensive) that the advertisements during a rebroadcast of the sporting event.

While the above describes insertion of video images or graphics, it is noted that the system is also capable of inserting audio into the feed by using audio modules along with the graphic feed modules. For example, in another embodiment, an audio segment is played each time a time a particular item (person, advertisement, etc.) is shown during the broadcast. In standard TV broadcast, the audio segment is provided on the secondary audio track (SAP) which is normally used for alternate languages, and is mixed with the normal program sound track as required. Advantageously, as described above, an audio track is provided in response to interactivity by the viewer. In addition to simply acknowledging selection of an active area, relational audio segments may also be provided. For example, during a broadcast of a swim meet as shown in Figure 4, if the user clicks a mouse on swim lane, the user might hear an audio representation of the swimmer's biorhythms, e.g., heartbeat.

It is noted that the multiple camera capability of the present invention, with a tracking module for each camera, provides certain additional advantages. First, since the replacement images or animations are used in a number of cameras angles, the continuity of the image is enhanced. Moreover, a great deal of information about the event (or targets) can only be extracted by the use of multiple cameras. For example, automatic detection of certain geometrical or color features is only possible by triangulation or other methods requiring two camera positions or angles (e.g., the speed of the leader in a race, the position of the offside mark in a field event, etc.). Further, when a target is obstructed in one view, the missing date is available through the view of another camera. Additionally, the attributes of the targets may be defined differently for each camera, thus providing more flexibility in the management of the feeds (e.g., the same target can be designated once as an opaque and once as a transparent to be included in different scenarios on a given feed).

Furthermore, while the description above related to replacement of the targets is generally directed toward replacement of localized targets, replacement of larger targets is also contemplated by the invention. For example, because of the clarity and definition provided by HDTV which shows flaws in background sets, etc. in much greater detail than previously possible, and because of the large bandwidth necessary to broadcast full fields/frames in HDTV, the present invention includes the provision of "virtual sets". A virtual set is a background set which is computer generated and which can be broadcast simply and quickly as a graphic. In the present invention, such a virtual set is then combined with a video feed (with the background removed) at the final broadcaster. As shown in Figure 5, a virtual set comprising a "newsroom" is combined with a video feed comprising the newscasters to provide a complete newscast. This system decreases the necessary bandwidth, improves the look of the final product, and even allows for customization of the background. For example, a customized newsroom can be used in conjunction with the news feed in figure 5 to make the broadcast appear more local.

## Claims

1. A virtual insertion system for replacing at least one target in a camera output with an image, said system comprising :
- a plurality of cameras (10) each providing a camera output;
- a switcher (31) for receiving the camera outputs and for providing a combined video output and tally signals associated with said combined video output, said tally signals indicating which camera or cameras provide said combined video output at any time ;
- a plurality of tracking modules (54) each receiving the camera output from at least one of said cameras and tracking the location of said target in said camera output; and
- a scenario server (58) for defining scripts for each of a plurality of output, in each comprising information regarding the order, content and timing of images to be inserted in place of said at least one target in a respective one of said plurality of feeds,
- a plurality of graphic feed modules (56),
**characterized in that**:
- said system further comprises a transition analysis module (50) for receiving said tally signals from said switcher (31) and for providing identification of said cameras and transitions between cameras (10) in said combined video output based on either a transition table comprising the type of transitions used by the switcher when transitioning from one camera to another or voice signals from a director;
- and **in that** said plurality of graphic feed modules (56) provide an output feed by inserting images into said combined video output based on tracking data regarding at least one target provided by said plurality of tracking modules (54) camera identification and transition information provided by said transition analysis module (50) and script information provided by said scenario server (58).

2. A virtual insertion system as in claim 1, wherein said scenario server, said plurality of tracking modules, said plurality of graphic modules and said transition analysis module are connected in a computer network and the transfer of data and video between said modules occurs over said computer network.

3. A virtual insertion system as in claim 1, wherein said scenario server controls the data flow between said plurality of tracking modules, said plurality of graphic modules and said transition analysis module.

4. A virtual insertion system as in any one of claims 1 - 3, wherein each of said plurality of tracking modules tracks the location of said at least one target in a camera output by processing images in the camera output.

5. A virtual insertion system as in any one of claims 1 - 3, wherein each of said plurality of cameras provides a camera output comprising video images and instrumentation data and each of said plurality of tracking modules receives instrumentation data from at least one camera and tracks the location of said at least one target in a camera output by processing said instrumentation data.

6. A method of providing a multiple feed virtual insertion system for replacing at least one target in the output of each of a plurality of cameras, said method comprising :
- providing a combined video output by switching between said camera outputs and providing tally signals indicative of which camera output is included in said combined video output at a given time ;
- tracking the location of said at least one target in said output of each of a plurality of cameras and providing an output of tracking data ;
- defining scripts for each of a plurality of feeds, comprising information regarding the order, content and timing of images to be inserted in place of said at least one target in each of a plurality of output;
**characterized by**:
- analyzing said tally signal and providing transition information regarding the identification of said cameras and transitions between cameras in said combined video output, said transition information being based either on a transition table comprising data related to the type of transitions between said plurality of cameras in said combined video output or on voice signals from a director;
- providing said output feeds by inserting images into said combined video output based on said tracking data, said transition information, and said scripts.

7. A method as in claim 6, wherein said images are inserted into said combined video output by a plurality of graphic modules each providing one feed.

8. A method as in claim 7, wherein a scenario server is provided for defining said scripts.

9. A method as in claim 7, further comprising tracking the location of said at least one target in the video output of each of said cameras either by processing said video outputs or by processing instrumentation data from said cameras.

10. The system as in claim 1, wherein:
- said tracking module is arranged for receiving said camera output and tracking a predefined active area in said camera output and providing coordinates indicative of the location of said active area in said camera output;
- said server is arranged for providing said camera output to an interactive receiver ;
and wherein the system further includes:
- a computer for detecting a selection of said active area from said interactive receiver and for providing a response to said selection.

11. An interactive insertion system as in claim 10, wherein said computer comprises a graphic feed module and wherein data related to said response is provided to said graphic feed module by said scenario server.

12. An interactive insertion system as in claim 10 or 11, wherein said server provides said coordinates to said interactive receiver and said interactive receiver comprises said computer for detecting a selection of said active area and for providing a response to said selection.

13. An interactive insertion system as in claim 10, 11 or 12, wherein said response to said selection comprises the display of a particular image on said interactive receiver.

## Patentansprüche

1. Ein virtuelles Einblendungssystem zur Ersetzung von zumindest einem Ziel in einer Kamera-Ausgabe durch ein Bild, wobei das System umfasst:
- eine Mehrzahl von Kameras (10), die jeweils eine Kamera-Ausgabe bereitstellen;
- einen Schalter (31) zum Empfang der Kamera-Ausgaben und zur Bereitstellung einer kombinierten Videoausgabe und von mit der kombinierten Videoausgabe assoziierten Tally-Signalen, wobei die Tally-Signale angeben, welche Kamera oder Kameras die kombinierte Videoausgabe zu einem beliebigen Zeitpunkt bereitstellen;
- eine Mehrzahl von Trackingmodulen (54), die jeweils die Kamera-Ausgabe von zumindest einer der Kameras empfangen und die Lage des Ziels in der Kamera-Ausgabe verfolgen; und
- einen Szenario-Server (58) zur Definition von Skripts für jede einer Mehrzahl von Ausgaben, jeweils umfassend Informationen zu Reihenfolge, Inhalt und zeitlicher Abstimmung von Bildern, die an Stelle des zumindest einen Ziels in einer entsprechenden der Mehrzahl von Speisungen einzublenden sind;
- eine Mehrzahl von Grafikspeisemodulen (56),
**dadurch gekennzeichnet, dass**:
- das System weiterhin ein Übergangsanalysemodul (50) zum Empfang der Tally-Signale von dem Schalter (31) und zur Identifizierung der Kameras und Übergänge zwischen Kameras (10) in der kombinierten Videoausgabe umfasst, basierend entweder auf einer Übergangstabelle, umfassend die Art der von dem Schalter verwendeten Übergänge beim Übergang von einer Kamera zu einer anderen, oder auf Sprachsignalen von einem Regisseur;
- und **dadurch**, dass die Mehrzahl von Grafikspeisemodulen (56) eine Ausgabe-Speisung bereitstellen durch Einblendung von Bildern in die kombinierte Videoausgabe, basierend auf Trackingdaten hinsichtlich zumindest eines Ziels, bereitgestellt durch die Mehrzahl von Trackingmodulen (54), die Kamera-Identifizierung und Übergangsinformationen, bereitgestellt durch das Übergangsanalysemodul (50), sowie Skriptinformationen, bereitgestellt durch den Szenario-Server (58).

2. Ein virtuelles Einblendungssystem nach Anspruch 1, wobei der Szenario-Server, die Mehrzahl von Trackingmodulen, die Mehrzahl von Grafikmodulen und das Übergangsanalysemodul in einem Computernetzwerk miteinander verbunden sind und die Daten- und Videoübertragung zwischen den Modulen über das Computernetzwerk erfolgt.

3. Ein virtuelles Einblendungssystem nach Anspruch 1, wobei der Szenario-Server den Datenfluss zwischen der Mehrzahl von Trackingmodulen, der Mehrzahl von Grafikmodulen und dem Übergangsanalysemodul steuert.

4. Ein virtuelles Einblendungssystem nach einem der Ansprüche 1 - 3, wobei jedes der Mehrzahl von Trackingmodulen die Lage des zumindest einen Ziels in einer Kamera-Ausgabe durch Verarbeitung von Bildern in der Kamera-Ausgabe verfolgt.

5. Ein virtuelles Einblendungssystem nach einem der Ansprüche 1 - 3, wobei jede der Mehrzahl von Kameras eine Kamera-Ausgabe bereitstellt, die Videobilder und Messdaten umfasst, und jedes der Mehrzahl von Trackingmodulen Messdaten von zumindest einer Kamera empfängt und die Lage des zumindest einen Ziels in einer Kamera-Ausgabe durch Verarbeitung der Messdaten verfolgt.

6. Ein Verfahren zur Bereitstellung eines virtuellen Einblendungssystems mit Mehrfachspeisung zur Ersetzung von zumindest einem Ziel in der Ausgabe jeder einer Mehrzahl von Kameras, wobei das Verfahren umfasst:
- Bereitstellen einer kombinierten Videoausgabe durch Schalten zwischen den Kamera-Ausgaben und Bereitstellen von Tally-Signalen, die angeben, welche Kamera-Ausgabe in der kombinierten Videoausgabe zu einem gegebenen Zeitpunkt enthalten ist;
- Verfolgen der Lage von zumindest einem Ziel in der Ausgabe einer jeden einer Mehrzahl von Kameras und Bereitstellen einer Ausgabe von Trackingdaten;
- Definition von Skripts für jede einer Mehrzahl von Speisungen, die Informationen zu Reihenfolge, Inhalt und zeitlicher Abstimmung von Bildern umfassen, die an Stelle des zumindest einen Ziels in jeder einer Mehrzahl von Ausgaben einzublenden sind;
**gekennzeichnet durch**:
- Analysieren der Tally-Signale und Bereitstellen von Übergangsinformationen bezüglich der Identifizierung der Kameras und Übergänge zwischen Kameras in der kombinierten Videoausgabe, wobei die Übergangsinformation entweder auf einer Übergangstabelle mit Daten bezüglich der Art der Übergänge zwischen der Mehrzahl von Kameras in der kombinierten Videoausgabe basiert oder auf Sprachsignalen von einem Regisseur;
- Bereitstellen der Ausgabe-Speisungen **durch** Einblendung von Bildern in die kombinierte Videoausgabe, basierend auf den Trackingdaten, den Übergangsinformationen und den Skripts.

7. Ein Verfahren nach Anspruch 6, wobei die Bilder in die kombinierte Videoausgabe durch eine Mehrzahl von Grafikmodulen eingeblendet werden, von denen jedes eine Speisung bereitstellt.

8. Ein Verfahren nach Anspruch 7, wobei ein Szenario-Server bereitgestellt wird zur Definition der Skripts.

9. Ein Verfahren nach Anspruch 7, weiterhin umfassend das Verfolgen der Lage des zumindest einen Ziels in der Videoausgabe jeder der Kameras, entweder durch Verarbeitung der Videoausgaben oder durch Verarbeitung von Messdaten der Kameras.

10. Das System nach Anspruch 1, wobei:
- das Trackingmodul angeordnet ist zum Empfang der Kamera-Ausgabe und zum Verfolgen eines vordefinierten aktiven Bereichs in der Kamera-Ausgabe sowie zur Bereitstellung von Koordinaten, die die Lage des aktiven Bereichs in der Kamera-Ausgabe angeben;
- der Server angeordnet ist zur Zuführung der Kamera-Ausgabe an einen interaktiven Empfänger;
und wobei das System weiterhin umfasst:
- einen Computer zum Erkennen einer Auswahl des aktiven Bereichs auf dem interaktiven Empfänger und zur Bereitstellung einer Antwort auf die Auswahl.

11. Ein interaktives Einblendungssystem nach Anspruch 10, wobei der Computer ein Grafikspeisemodul umfasst und wobei die mit der Antwort zusammenhängenden Daten dem Grafikspeisemodul durch den Szenario-Server zugeführt werden.

12. Ein interaktives Einblendungssystem nach Anspruch 10 oder 11, wobei der Server die Koordinaten dem interaktiven Empfänger zuführt und der interaktive Empfänger den Computer zur Erkennung einer Auswahl des aktiven Bereichs und zur Bereitstellung einer Antwort auf die Auswahl umfasst.

13. Ein interaktives Einblendungssystem nach Anspruch 10, 11 oder 12, wobei die Antwort auf die Auswahl die Anzeige eines bestimmten Bildes auf dem interaktiven Empfänger umfasst.

## Revendications

1. Système d'insertion virtuel pour remplacer au moins une cible dans une sortie de caméra par une image, ledit système comprenant :
- une pluralité de caméras (10) chacune fournissant une sortie de caméra ;
- un aiguilleur (31) pour recevoir les sorties de caméra et pour fournir une sortie vidéo mélangée et des signaux de pointage associés à ladite sortie vidéo mélangée, lesdits signaux de pointage indiquant quelle caméra ou caméras fournit(ssent) ladite sortie vidéo mélangée à un moment quelconque ;
- une pluralité de modules de suivi (54) chacun recevant la sortie de caméra d'au moins une desdites caméras et suivant l'emplacement de ladite cible dans ladite sortie de caméra ; et
- un serveur de scénario (58) pour définir des scripts pour chacun d'une pluralité de sorties, dont chacun comprenant des informations concernant l'ordre, le contenu et la temporisation des images à insérer à la place d'au moins une dite cible dans celle respective de ladite pluralité d'éléments d'émission,
- une pluralité de modules d'élément d'émission graphique (56),
**caractérisé en ce que** :
- ledit système comprend en outre un module d'analyse de transition (50) pour recevoir lesdits signaux de pointage dudit aiguilleur (31) et pour fournir l'identification desdites caméras et des transitions entre des caméras (10) dans ladite sortie vidéo mélangée sur la base soit d'une table de transitions comprenant le type de transitions utilisé par l'aiguilleur lors d'une transition d'une caméra à une autre soit des signaux vocaux d'un réalisateur ;
- et **en ce que** ladite pluralité de modules d'élément d'émission graphique (56) fournissent un élément d'émission de sortie en insérant des images dans ladite sortie vidéo mélangée sur la base des données de suivi concernant au moins une cible fournie par ladite pluralité de modules de suivi (54) l'identification de caméra et des informations de transition fournies par ledit module d'analyse de transition (50) et des informations de script fournies par ledit serveur de scénario (58).

2. Système d'insertion virtuelle selon la revendication 1, dans lequel ledit serveur de scénario, ladite pluralité de modules de suivi, ladite pluralité de modules graphiques et ledit module d'analyse de transition sont connectés dans un réseau d'ordinateur et le transfert des données et la vidéo entre lesdits modules sont produits sur ledit réseau d'ordinateur.

3. Système d'insertion virtuelle selon la revendication 1, dans lequel ledit serveur de scénario commande les flux de données entre ladite pluralité de modules de suivi, ladite pluralité de modules graphiques et ledit module d'analyse de transition.

4. Système d'insertion virtuelle selon l'une quelconque des revendications 1 à 3, dans lequel chacun de ladite pluralité de modules de suivi suit l'emplacement d'au moins une dite cible dans une sortie de caméra en traitant des images dans la sortie de caméra.

5. Système d'insertion virtuelle selon l'une quelconque des revendications 1 à 3, dans lequel chacune de ladite pluralité de caméras fournit une sortie de caméra comprenant des images vidéo et des données d'instrumentation et chacun de ladite pluralité de modules de suivi reçoit des données d'instrumentation d'au moins une caméra et suit l'emplacement d'au moins une dite cible dans une sortie de caméra en traitant lesdites données d'instrumentation.

6. Procédé de fourniture d'un système d'insertion virtuelle d'élément d'émission multiple pour remplacer au moins une cible dans la sortie de chacune d'une pluralité de caméras, ledit procédé comprenant :
- la fourniture d'une sortie vidéo mélangée en commutant entre ladite sortie de caméra et la fourniture de signaux de pointage indicateurs de quelle sortie de caméra est comprise dans ladite sortie de vidéo mélangée à un instant donné ;
- le suivi de l'emplacement d'au moins une dite cible dans ladite pluralité de chacun d'une pluralité de caméras et la fourniture d'une sortie des données de suivi ;
- la définition de scripts pour chacun d'une pluralité d'éléments d'émission, comprenant des informations concernant l'ordre, le contenu et la temporisation des images à insérer à la place d'au moins une dite cible dans chacune d'une pluralité de sorties ;
**caractérisé par** :
- l'analyse dudit signal de pointage et fourniture des informations de transition concernant l'identification desdites caméras et des transitions entre des caméras dans ladite sortie vidéo mélangée, lesdites informations de transition étant basées soit sur une table de transitions comprenant des données concernant le type de transition entre ladite pluralité de caméras dans ladite sortie vidéo mélangée soit sur des signaux vocaux d'un réalisateur ;
- la fourniture desdits éléments d'émission de sortie en insérant des images dans ladite sortie vidéo mélangée sur la base desdites données de suivi, desdites données de transition et desdits scripts.

7. Procédé selon la revendication 6, dans lequel lesdites images sont insérées dans ladite sortie vidéo mélangée par une pluralité de modules graphiques chacun fournissant un élément d'émission.

8. Procédé selon la revendication 7, dans lequel un serveur de scénario est fourni pour définir lesdits scripts.

9. Procédé selon la revendication 7, comprenant en outre un suivi de l'emplacement d'au moins une dite cible dans la sortie vidéo de chacune desdites caméras soit en traitant lesdites sorties vidéo soit en traitant des données d'instrumentation desdites caméras.

10. Système selon la revendication 1, dans lequel :
- ledit module de suivi est disposé pour recevoir ladite sortie de caméra et le suivi d'une zone active prédéfinie dans ladite sortie de caméra et fourniture des coordonnées indicatrices de l'emplacement de ladite zone active dans ladite sortie de caméra ;
- ledit serveur est disposé pour fournir ladite sortie de caméra pour un récepteur interactif ;
et dans lequel le système comprend en outre :
- un ordinateur pour détecter une sélection de ladite surface active dudit récepteur interactif et pour fournir une réponse à ladite sélection.

11. Système d'insertion interactif selon la revendication 10, dans lequel ledit ordinateur comprend un module d'élément d'émission graphique et dans lequel des données liées à ladite réponse sont fournies audit module d'élément d'émission graphique par ledit serveur de scénario.

12. Système d'insertion interactif selon la revendication 10 ou 11, dans lequel ledit serveur fournit lesdites coordonnées audit récepteur interactif et ledit récepteur interactif comprend ledit ordinateur pour détecter une sélection de ladite zone active et pour fournir une réponse à ladite sélection.

13. Système d'insertion interactif selon la revendication 10, 11 ou 12, dans lequel ladite réponse à ladite sélection comprend l'affichage d'une image particulière sur ledit récepteur interactif.
